# EUROPEAN PATENT SPECIFICATION

(11) **EP 2 746 623 B1**
(45) Date of publication and mention of the grant of the patent: **28.03.2018**
(21) Application number: 12198580.8
(22) Date of filing: 20.12.2012
(51) Int. Cl.: F16J 1/16, F16J 1/18

(54) **Piston pin with emergency guiding capability**
Kolbenbolzen mit Notführungsfähigkeit
Axe de piston avec capacité de guidage d'urgence

(43) Date of publication of application: 25.06.2014
(73) Proprietor: Caterpillar Energy Solutions GmbH, 68167 Mannheim (DE)
(72) Inventor: Stellwagen, Karl, 67227 Frankenthal (DE)
(74) Representative: BRP Renaud & Partner mbB Rechtsanwälte Patentanwälte Steuerberater

(56) References cited:
- EP-A2- 1 227 269
- WO-A1-2013/182732
- DE-A1- 3 642 525
- DE-A1-102006 035 178
- GB-A- 820 188
- US-A- 3 575 089
- US-A- 4 640 641
- US-A- 5 289 758

## Description

### Technical Field

The present disclosure generally relates to internal combustion engines, and more particularly to piston pins configured to connect connecting rods and pistons of an internal combustion engine.

### Background

A known technique for connecting a piston to an associated connecting rod are piston pin. Said piston pin allow delivery of power between a rotating crankshaft and a reciprocating piston. The piston, the piston pin, the connecting rod and the crankshaft together facilitate conversion in both directions between linear motion of the piston and rotational movement of the crankshaft.

For example, EP 1 227 269 A2 discloses a piston connected to a connecting rod via a piston pin. The piston pin may comprise spherical end surfaces axially securing the piston pin in the piston as they may come into contact with a combustion cylinder during operation of the engine.

Instead of providing the piston pin in an axially movable manner, piston pins are often axially fixed in the piston by circlips, end caps or the like. For example, DE 10 2006 035 178 A1 and DE 36 42 525 A1 disclose axially fixed piston pins.

Further piston pins are known from US 3 575 089 A and GB 820 188 A.

The present invention is directed, at least in part, to improving or overcoming one or more aspects of prior systems.

### Summary of the Invention

The present invention provides a piston assembly according to claim 1 and a method according to claim 6. Further developments are given in the dependent claims.

In one aspect of the present disclosure, a piston pin may be configured to connect a connecting rod and a piston arranged within a cylinder having an inner cylinder wall. The piston pin may be integrally formed with a first emergency guiding outer wall facing the inner cylinder wall and a second emergency guiding outer wall on an opposite side of the piston pin with respect to the first emergency guiding outer wall, the second emergency guiding outer wall facing the inner cylinder wall. Piston pin may be dimensioned to contact the inner cylinder wall with the first emergency guiding outer wall and the second emergency guiding outer wall only in case of a demolition of the piston.

In another aspect of the present disclosure, a piston assembly may be configured to be arranged in a cylinder, may comprise a piston configured to be reciprocatingly arranged within the cylinder, a connecting rod, and a piston pin. The piston pin may connect the connecting rod and the piston. The piston assembly may further comprise a first circlip and a second circlip. The first circlip and the second circlip may be arranged to axially fix the piston pin in the piston.

In yet another aspect of the present disclosure, a method for providing an emergency guidance of a connecting rod with a piston pin in a cylinder only in case of a piston demolition may comprise providing a fixed gap between each end of the piston pin and the inner cylinder wall within the range from 0.1 % to 5 % of an inner cylinder diameter.

Other features and aspects of this disclosure will be apparent from the following description and the accompanying drawings.

### Brief Description of the Drawings

Fig. 1 shows a sectional view of a piston assembly arranged within a cylinder of an internal combustion engine
Fig. 2 shows a sectional view of a piston pin; and
Fig. 3 shows another sectional view of an exemplary piston pin according to the invention.

### Detailed Description

The following is a detailed description of examples. The examples are not intended to be, and should not be considered as, a limiting description of the scope of patent protection. Rather, the scope of patent protection shall be defined by the appended claims.

The present disclosure may be based in part on the realization that in case of a piston demolition, a connecting rod may cause considerable damage to the cylinder liner as the connecting rod may reciprocate within the cylinder in an unguided state for several times within before the engine stops.

Accordingly, a piston pin having emergency guidance capabilities is disclosed. Emergency guiding outer walls of the piston pin may facilitate guidance of the connecting rod only in case of a piston demolition.

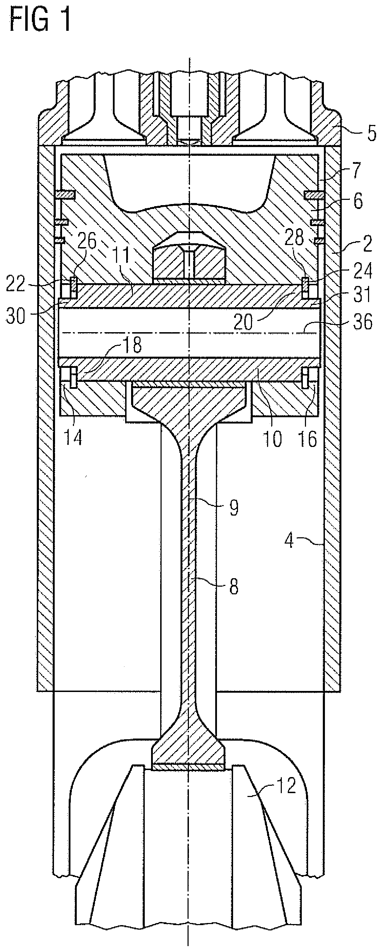

Referring now to Fig. 1, a piston arranged in a cylinder of an internal combustion engine is shown.

A cylinder 2 of an internal combustion engine (not shown) extends along a central axis 9 includes an inner cylinder wall 4. Cylinder 2 is covered by a cylinder head 5, which accommodates various components such as inlet valves(s) and port(s), outlet valve(s) and port(s) and a spark plug.

A piston 6 is reciprocatingly arranged along central axis 9 within cylinder 2. Piston 6 is connected via a piston pin 10 to a connecting rod 8 which in turn is connected to a crankshaft 12. Piston 6 comprises a piston skirt 7 facing inner cylinder wall 4.

Piston pin 10 is disposed in piston bosses 14 and 16. Specifically, piston pin 10 is arranged in a first piston boss 14 and a second piston boss 16. Axially fixation of piston pin 10 is achieved by first circlip 22 arranged in a circlip groove 26 in first piston boss 14, and second circlip 24 arranged in a circlip groove 28 in second piston boss 16. Thus, piston pin 10 is axially secured between first circlip 22 and second circlip 24. In the shown configuration, piston pin 10 is formed as hollow piston pin and configured to connect connecting rod 8 and piston 6 arranged within cylinder 2 of an internal combustion engine.

Piston pin 10 comprises a main body section 11 extending between main body section ends 18, 20, and emergency guiding sections 30, 31 extend towards inner cylinder wall 4 from main body section ends 18, 20 without contacting the same.

Piston 6, connecting rod 8, piston pin 10, and circlips 22, 24 together form a piston assembly 33.

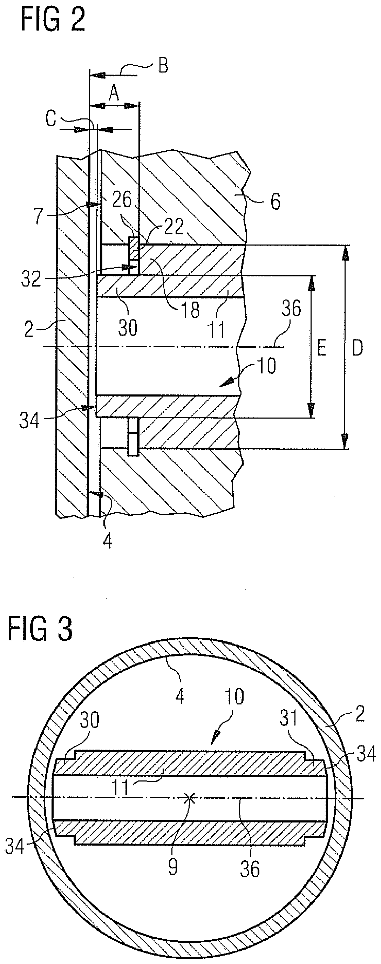

Fig. 2 gives a more detailed view of first emergency guiding section 30 extending from main body section 11 of piston pin 10 at first main body section end 18 in a sectional view. However, the hereinafter given description similarly relates to second emergency guiding section 31 extending from second main body section end 20 towards inner cylinder wall 4.

Due to structural limitations caused by the axial fixation of piston pin 10 by circlip 22 in circlip groove 26, first main body section end 18 of piston pin 10 is spaced apart with its main body piston pin outer wall 32 from inner cylinder wall 4 in a distance A. In practice, distance A may be typically within a range from 5 % to 10 % of an inner cylinder diameter B.

Emergency guiding section 30 is configured to set distance C between an integrally formed emergency guiding outer wall 34 and inner cylinder wall 4 within a range from 0.1 % to 5 %, preferably within a range from 0.1 % to 4.5 %, of inner cylinder diameter B. Therefore, emergency guiding section 30 may extend more or less along a piston pin axis 36, said extend depending on several boundary conditions defined by, for example, position of circlip groove 26, length of piston pin 10, and diameter of piston skirt 7.

Although shown in Fig. 2, emergency guiding section 30 may not necessarily extend beyond piston skirt 7. That is, depending on a desired distance C within a range from 0.1 % to 5 %, for example 1 %, of an inner cylinder diameter B and a distance between piston skirt 7 and inner cylinder wall 4 depending on the specific piston used, emergency guiding outer wall 34 may extend beyond piston skirt 7, may extend until piston skirt 7, or may extend within the confines of piston skirt 7.

To facilitate arrangement of circlip 22, an emergency guiding section diameter E of emergency guiding section 30 is less than a main body diameter D of main body section 11 of piston pin 10. Accordingly, piston pin 10 is configured to be axially fixed along piston pin axis 36 via circlips, namely circlip 22 and circlip 24 (shown in Fig. 1)

Piston pin 10 may be made of, for example, aluminum or steel.

Additionally, emergency guiding outer wall 34 may be coated with a sliding coating, for example, a polyamideimide based coating with added lubricant and hard particle enhancements.

Turning to Fig. 3, a sectional view of an exemplary piston pin 10, in accordance with an embodiment of the present invention, is shown. Sectional view of Fig. 3 lies in a plane of piston pin axis 36 and perpendicular to central axis 9. For purpose of clarity, only piston pin 10 and cylinder 2 with inner cylinder wall 4 are shown.

As can be seen, emergency guiding outer wall 34 has a curved shape. Some sections of said curved shape may be adapted to a shape of inner cylinder wall 4. For example, emergency guiding outer wall 34 may be at least partially shaped as a spherical cap, a spherical segment, and/or a cylindrical surface segment.

### Industrial Applicability

In the following, operation and functionality of exemplary disclosed emergency guiding elements 30 is described with reference to Figs. 1 and 2.

During operation of the internal combustion engine, piston 6 reciprocates within cylinder 2. In doing so, piston pin 10 is axially secured along piston pin axis 36 due to the presence of circlips 22 and 24. As emergency guiding sections 30 and 31 are configured set a minimum distance C between emergency guiding outer wall 34 and inner cylinder wall 4 within a range from 0.1 % to 5 % of the inner cylinder diameter B, emergency guiding sections 30 and 31 do not come into contact with inner cylinder wall 4.

However, in the case of a piston demolition which constitutes in piston 6 braking away from piston pin 10, emergency guiding outer wall 34 of emergency guiding section 30 comes into contact with inner cylinder wall 4. Thus, piston pin 10 is dimensioned to contact inner cylinder wall 4 with first and second emergency guiding outer wall 34 only in case of a demolition of piston 6.

Said contact between emergency guiding outer wall 34 and inner cylinder wall 4 in case of said piston demolition facilitates an emergency guidance of connecting rod 8 until the internal combustion engine finally stops. That is, piston pin 10 comprises an emergency guidance capability. The emergency guidance of connecting rod 8 may reduce damage of connecting rod 8 reciprocating in cylinder 2 after demolition of piston 6.

Furthermore, a tilting tendency of piston pin 6 in case of a demolition of the piston 6 may be reduced by providing emergency guiding outer wall 34 with a height. Height as used herein means an extend of contact face 34 along an axis parallel to central axis 9 (for example, as can be seen in Fig. 2). Thereby, more than one potential emergency guiding contact point on emergency guiding outer wall 34 may be provided. In other words, each of the first and second emergency guiding outer wall 34 may be configured to provide two emergency guiding contact points to contact inner cylinder wall 4 only in case of a demolition of piston 6. The two emergency guiding contact points being spaced apart from each other in a direction of central axis 9 of cylinder 2. This may be achieved, for example, by forming emergency guiding outer wall 34 as a cylindrical surface segment (which may have an annular shape due to the tubular nature of piston pin 10). A reduced tilting tendency may further lead to an improved emergency guidance of connecting rod 8.

On the contrary, in prior art solutions, a piston pin may be spaced apart with its outer wall at each end from an inner cylinder wall in a distance being typically within a range from 5 % to 10 % of an inner cylinder diameter, or greater, as already described. If a piston demolition occurs in such configurations, the clearance between the outer wall of the piston pin and the inner cylinder wall is too large resulting in an unguided reciprocation of a connecting rod attached to the piston pin for the next few strokes of the internal combustion engine until the engine finally stops. The unguided connecting rod may cause considerable damage to the cylinder wall, the cylinder as well as the entire engine, which may lead to a complete engine write-off.

Accordingly, emergency guiding sections 30 and 31 may reduce damages occurring after a piston demolition, which may allow a repair of the piston demolition (for example, by replacement) in a cost effective manner as a complete engine write-off due to an unguided connecting rod considerably increasing the damage may be prevented.

As emergency guiding sections 30 and 31 are not in contact with inner cylinder wall 4 during normal operation of the internal combustion engine, no friction between emergency guiding sections 30 and 31 and inner cylinder wall 4 occurs, which could reduce efficiency of the internal combustion engine.

The present disclosure further relates to a method for providing an emergency guidance of a connecting rod with a piston pin in a cylinder only in case of a demolition of the piston.

The method comprises providing a fixed gap between each end of piston pin 10 and inner cylinder wall 4 within the range from 0.1 % to 5 %, preferably 0.1 % to 4.5 % of an inner cylinder diameter B. For example, this may be achieved by providing emergency guiding sections 30, 31 as exemplary disclosed herein at each end of piston pin 10, thereby, said fixed gap may be provided between emergency guiding section outer wall 34 and inner cylinder wall 4.

Additionally, the method may comprise releasing the fixed gap only in case of a demolition of the piston. In other words, the method may comprise the step of guiding the piston pin (10) only in case of a piston demolition. For instance, emergency guiding sections 30, 31 of piston pin 10 may be configured to come into contact with inner cylinder wall 4 only in case of a demolition of piston 6 as piston pin 10 is axially secured along piston axis 36 during operation of the internal combustion engine.

The method may further comprise reducing tilting of the piston pin (10) by providing two emergency guiding contact points at opposing sides of the piston pin (10) for contacting the inner cylinder wall (4) if guiding the piston pin (10) in the case of a piston demolition as already described in detail.

Generally, piston pin 10 having an emergency guiding capability may be applicable in internal combustion engines including a piston connected to a connecting rod via a piston pin. Said internal combustion engine may include features not shown, such as air systems, cooling systems, peripheries, drivetrain components, etc. Furthermore, internal combustion engine may be of any size, with any number of cylinders, and in any configuration (e.g., "V," in-line, radial, etc.). Additionally, internal combustion engine may be used to power any machine or other device, including, but not limited to, locomotive applications, on-highway trucks or vehicles, off-highway trucks or machines, earth moving equipment, generators, aerospace applications, marine applications, offshore applications, pumps, stationary equipment, or other engine powered applications.

Furthermore, piston pin 10 with emergency guiding capability may be applicable in any piston machine including, but not limited to, piston compressors and piston pumps, to reduce damages caused by a piston demolition.

Although the preferred embodiment of this invention has been described herein, improvements and modifications may be incorporated without departing from the scope of the following claims.

## Claims

1. A piston assembly (33) for arranging in a cylinder (2) having an inner cylinder wall (4), comprising:
a piston (6) configured to be reciprocatingly arranged within the cylinder (2);
a connecting rod (8);
a piston pin (10) connecting the connecting rod (8) and the piston (6), the piston pin (10) being integrally formed with:
a first emergency guiding outer wall (34) for facing the inner cylinder wall (4), and
a second emergency guiding outer wall (34) for facing the inner cylinder wall (4), the second emergency guiding wall (34) being arranged on an opposite side of the piston pin (10) with respect to the first emergency guiding outer wall (34);
a first circlip (22); and
a second circlip (24); wherein
the first circlip (22) and the second circlip (24) are arranged to axially fix the piston pin (10) in the piston (6),
the piston pin (10) is dimensioned to contact the inner cylinder wall (4) with the first emergency guiding outer wall (34) and the second emergency guiding outer wall (34) only in case of a demolition of the piston (6),
the first emergency guiding outer wall (34) and/or the second emergency guiding outer wall (34) has a curved shape adapted to a shape of the inner cylinder wall (4), and
the first emergency guiding outer wall (34) and/or the second emergency guiding outer wall (34) is at least partially shaped as any one of a spherical cap, a spherical segment, or a cylindrical surface segment.

2. The piston assembly (33) of claim 1, wherein the piston pin (10) comprises:
a main body section (11) with a first main body section end (18) and a second main body section end (20), the main body section (11) having a main body diameter (D);
a first emergency guiding section (30) having a first emergency guiding section diameter (E) and extending from the first main body section end (18) of the main body section (11); and
a second emergency guiding section (31) having a second emergency guiding section diameter (E) and extending from the second main body section end (20) of the main body section (11);
wherein the main body diameter (D) is greater than the first guiding section diameter (E) and the second guiding section diameter (E).

3. The piston assembly (33) of claim 1 or 2, wherein the cylinder (2) extends along a central axis (9),
the first emergency guiding outer wall (34) is configured to provide two emergency guiding contact points for contacting the inner cylinder wall (4) only in case of a demolition of the piston (6), the two emergency guiding contact points being spaced apart from each other in a direction of the central axis (9); and
the second emergency guiding outer wall (34) is configured to provide two emergency guiding contact points for contacting the inner cylinder wall (4) only in case of a demolition of the piston (6), the two emergency guiding contact points being spaced apart from each other in a direction of the central axis (9).

4. The piston assembly (33) of any one of the preceding claims, wherein the piston pin (10) is made of aluminum or steel; and/or
wherein the first emergency guiding outer wall (34), and/or the second emergency guiding outer wall (34) are coated with a sliding coating.

5. A cylinder and piston assembly of an internal combustion engine, the cylinder and piston assembly comprising a cylinder (2) and the piston assembly (33) according to any one of the preceding claims, wherein the cylinder (2) has an inner cylinder diameter (B), and the piston pin (10) is further configured to:
set a minimum distance between the first emergency guiding outer wall (34) and the inner cylinder wall (4) within a range from 0.1 % to 5 % of the inner cylinder diameter (B); and
set a minimum distance between the second emergency guiding outer wall (34) and the inner cylinder wall (4) within a range from 0.1 % to 5 % of the inner cylinder diameter (B).

6. A method for providing an emergency guidance of a connecting rod (8) with a piston assembly (33) according to any one of claims 1 to 4, comprising:
providing a fixed gap between each end of the piston pin (10) and the inner cylinder wall (4) within the range from 0.1 % to 5 % of an inner cylinder diameter (B), the piston pin (10) being axially fixed in the piston (6) via a first circlip (22) and a second circlip (24).

7. The method of claim 6, further comprising the step of contacting the inner cylinder wall (4) with the piston pin (10) only in case of a demolition of the piston (6).

8. The method of claim 7, wherein the method step of contacting the inner cylinder wall (4) with the piston pin (10) only in case of a demolition of the piston (6) further comprises reducing tilting of the piston pin (10) by providing two emergency guiding contact points at opposing sides of the piston pin (10) for contacting the inner cylinder wall (4).

## Patentansprüche

1. Kolbeneinheit (33) zur Anordnung in einem Zylinder (2), aufweisend eine innere Zylinderwand (4), umfassend:
einen Kolben (6), der konfiguriert ist, um reziprok innerhalb des Zylinders (2) angeordnet zu sein;
eine Verbindungsstange (8);
einen Kolbenbolzen (10), der die Verbindungsstange (8) und den Kolben (6) verbindet, wobei der Kolbenbolzen (10) einstückig geformt ist mit:
einer ersten Notführungs-Außenwand (34), um der inneren Zylinderwand (4) gegenüber zu liegen, und
einer zweiten Notführungs-Außenwand (34), um der inneren Zylinderwand (4) gegenüber zu liegen, wobei die zweite Notführungs-Wand (34) auf einer gegenüber liegenden Seite des Kolbenbolzens (10) mit Bezug auf die erste Notführungs-Außenwand (34) angeordnet ist;
einen ersten Sicherungsring (22),
einen zweiten Sicherungsring (24); wobei
der erste Sicherungsring (22) und der zweite Sicherungsring (24) angeordnet sind, um den Kolbenbolzen (10) im Kolben (6) axial zu fixieren,
der Kolbenbolzen (10) abgemessen ist, um die innere Zylinderwand (4) mit der ersten Notführungs-Außenwand (34) und der zweiten Notführungs-Außenwand (34) nur für den Fall einer Zerstörung des Kolbens (6) in Kontakt zu bringen,
die erste Notführungs-Außenwand (34) und/oder die zweite Notführungs-Außenwand (34) eine gekrümmte Form aufweist, die an eine Form der inneren Zylinderwand (4) angepasst ist, und
die erste Notführungs-Außenwand (34) und/oder die zweite Notführungs-Außenwand (34) mindestens teilweise geformt ist als eines von einer sphärischen Kappe, eines sphärischen Segments oder eines zylindrischen Oberflächensegments.

2. Kolbeneinheit (33) nach Anspruch 1, wobei der Kolbenbolzen (10) umfasst:
einen Hauptkörperabschnitt (11) mit einem ersten Hauptkörperabschnittsende (18) und einem zweiten Hauptkörperabschnittsende (20), wobei der Hauptkörperabschnitt (11) einen Hauptkörperdurchmesser (D) aufweist;
wobei ein erster Notführungsabschnitt (30) einen ersten Notführungsabschnittsdurchmesser (E) aufweist, und sich vom ersten Hauptkörperabschnittsende (18) des Hauptkörperabschnitts (11) erstreckt; und
wobei ein zweiter Notführungselementabschnitt (31) einen zweiten Notführungsabschnittsdurchmesser (E) aufweist und sich vom zweiten Hauptkörperabschnittsende (20) des Hauptkörperabschnitts (11) erstreckt;
wobei der Hauptkörperdurchmesser (D) größer als der erste Führungsabschnittsdurchmesser (E) und der zweite Führungsabschnittsdurchmesser (E) ist.

3. Kolbeneinheit (33) nach Anspruch 1 oder 2, wobei sich der Zylinder (2) entlang einer zentralen Achse (9) erstreckt,
die erste Notführungs-Außenwand (34) konfiguriert ist, um zwei NotführungsKontaktpunkte bereitzustellen, um mit der inneren Zylinderwand (4) nur für den Fall einer Zerstörung des Kolbens (6) in Kontakt zu kommen, wobei die zwei Notführungskontaktpunkte voneinander in einer Richtung der zentralen Achse (9) beabstandet sind, und;
die zweite Notführungs-Außenwand (34) konfiguriert ist, um zwei NotführungsKontaktpunkte bereitzustellen, um mit der inneren Zylinderwand (4) nur für den Fall einer Zerstörung des Kolbens (6) in Kontakt zu kommen, wobei die zwei NotführungsKontaktpunkte voneinander in einer Richtung der zentralen Achse (9) beabstandet sind.

4. Kolbeneinheit (33) nach einem der vorstehenden Ansprüche, wobei der Kolbenbolzen (10) aus Aluminium oder Stahl hergestellt ist; und/oder
wobei die erste Notführungs-Außenwand (34) und/oder die zweite Notführungs-Außenwand (34) mit einer Gleitbeschichtung beschichtet sind.

5. Zylinder- und Kolbeneinheit eines Verbrennungsmotors, wobei die Zylinder- und Kolbeneinheit einen Zylinder (2) und die Kolbeneinheit (33) nach einem der vorstehenden Ansprüche umfasst, wobei der Zylinder (2) einen inneren Zylinderdurchmesser (B) aufweist und der Kolbenbolzen (10) weiter konfiguriert ist, um:
einen minimalen Abstand zwischen der ersten Notführungs-Außenwand (34) und der inneren Zylinderwand (4) innerhalb eines Bereichs von 0,1 % bis 5 % des inneren Zylinderdurchmessers (B) festzusetzen; und
einen minimalen Abstand zwischen der zweiten Notführungs-Außenwand (34) und der inneren Zylinderwand (4) innerhalb eines Bereichs von 0,1 % bis 5 % des inneren Zylinderdurchmessers (B) festzusetzen.

6. Verfahren zum Bereitstellen einer Notführung einer Verbindungsstange (8) mit einer Kolbeneinheit (33) nach einem der Ansprüche 1 bis 4, umfassend:
Bereitstellen eines fixierten Zwischenraums zwischen jedem Ende des Kolbenbolzens (10) und der inneren Zylinderwand (4) innerhalb des Bereichs von 0,1 % bis 5 % eines inneren Zylinderdurchmessers (B), wobei der Kolbenbolzen (10) axial im Kolben (6) mit Hilfe eines ersten Sicherungsrings (22) und eines zweiten Sicherungsrings (24) fixiert ist.

7. Verfahren nach Anspruch 6, weiter umfassend den Schritt des In-Kontakt-Bringens der inneren Zylinderwand (4) mit dem Kolbenbolzen (10) nur für den Fall einer Zerstörung des Kolbens (6).

8. Verfahren nach Anspruch 7, wobei der Verfahrensschritt des In-Kontakt-Bringens der inneren Zylinderwand (4) mit dem Kolbenbolzen (10) nur für den Fall einer Zerstörung des Kolbens (6) weiter das Reduzieren des Kippens des Kolbenbolzens (10) durch Bereitstellen von zwei Notführungs-Kontaktpunkten an gegenüberliegenden Seiten des Kolbenbolzens (10) zum In-Kontakt-Bringen der inneren Zylinderwand (4) umfasst.

## Revendications

1. Ensemble de piston (33) pour agencer dans un cylindre (2) ayant une paroi de cylindre interne (4), comprenant :
un piston (6) configuré pour être agencé de manière à pouvoir effectuer un mouvement de va-et-vient dans le cylindre (2) ;
une bielle (8) ;
un axe de piston (10) raccordant la bielle (8) et le piston (6), l'axe de piston (10) étant formé d'un seul tenant avec :
une première paroi externe de guidage d'urgence (34) pour être en regard de la paroi de cylindre interne (4) et
une seconde paroi externe de guidage d'urgence (34) pour être en regard de la paroi de cylindre interne (4), la seconde paroi de guidage d'urgence (34) étant agencée sur un côté opposé de l'axe de piston (10) par rapport à la première paroi externe de guidage d'urgence (34) ;
un premier circlip (22) ; et
un second circlip (24) ; dans lequel
le premier circlip (22) et le second circlip (24) sont agencés pour fixer axialement l'axe de piston (10) dans le piston (6),
l'axe de piston (10) est dimensionné pour mettre en contact avec la paroi de cylindre interne (4) avec la première paroi externe de guidage d'urgence (34) et la seconde paroi externe de guidage d'urgence (34) uniquement dans le cas d'une destruction du piston (6),
la première paroi externe de guidage d'urgence (34) et/ou la seconde paroi externe de guidage d'urgence (34) a ou ont une forme incurvée adaptée à une forme de la paroi de cylindre interne (4), et
la première paroi externe de guidage d'urgence (34) et/ou la seconde paroi externe de guidage d'urgence (34) est ou sont au moins conformées en partie en l'un quelconque d'un chapeau sphérique, d'un segment sphérique ou d'un segment de surface cylindrique.

2. Ensemble de piston (33) selon la revendication 1, dans lequel l'axe de piston (10) comprend :
une section de corps principale (11) avec une première extrémité de section de corps principale (18) et une seconde extrémité de section de corps principale (20), la section de corps principale (11) ayant un diamètre de corps principal (D) ;
une première section de guidage d'urgence (30) ayant un premier diamètre de section de guidage d'urgence (E) et s'étendant de la première extrémité (18) de section de corps principale (11) ; et
une seconde section de guidage d'urgence (31) ayant un second diamètre de section de guidage d'urgence (E) et s'étendant de la seconde extrémité (20) de la section de corps principale (11) ;
dans lequel le diamètre de corps principal (D) est supérieur au premier diamètre de section de guidage (E) et au second diamètre de section de guidage (E).

3. Ensemble de piston (33) selon la revendication 1 ou 2, dans lequel le cylindre (2) s'étend le long d'un axe central (9),
la première paroi externe de guidage d'urgence (34) est configurée pour fournir deux points de contact de guidage d'urgence pour venir en contact avec la paroi de cylindre interne (4) uniquement dans le cas d'une destruction du piston (6), les deux points de contact de guidage d'urgence étant espacés l'un de l'autre dans une direction de l'axe central (9) ; et
la seconde paroi externe de guidage d'urgence (34) est configurée pour fournir deux points de contact de guidage d'urgence pour venir en contact avec la paroi de cylindre interne (4) uniquement dans le cas d'une destruction du piston (6), les deux points de contact de guidage d'urgence étant espacés l'un de l'autre dans une direction de l'axe central (9).

4. Ensemble de piston (33) selon l'une quelconque des revendications précédentes, dans lequel l'axe de piston (10) est constitué d'aluminium ou d'acier ; et/ou
dans lequel la première paroi externe de guidage d'urgence (34) et/ou la seconde paroi externe de guidage d'urgence (34) est ou sont revêtues d'un revêtement glissant.

5. Ensemble de cylindre et piston d'un moteur à combustion interne, l'ensemble de cylindre et piston comprenant un cylindre (2) et l'ensemble de piston (33) selon l'une quelconque des revendications précédentes, dans lequel le cylindre (2) a un diamètre de cylindre interne (B) et l'axe de piston (10) est en outre configuré pour :
régler une distance minimale entre la première paroi externe de guidage d'urgence (34) et la paroi de cylindre interne (4) dans une plage de 0,1 % à 5 % du diamètre de cylindre interne (B) ; et
régler une distance minimale entre la seconde paroi externe de guidage d'urgence (34) et la paroi de cylindre interne (4) dans une plage de 0,1 % à 5 % du diamètre de cylindre interne (B).

6. Procédé de fourniture d'un guidage d'urgence d'une bielle (8) avec un ensemble de piston (33) selon l'une quelconque des revendications 1 à 4, comprenant :
la fourniture d'un espacement fixe entre chaque extrémité de l'axe de piston (10) et la paroi de cylindre interne (4) dans la plage de 0,1 % à 5 % d'un diamètre de cylindre interne (B), l'axe de piston (10) étant fixé axialement dans le piston (6) via un premier circlip (22) et un second circlip (24).

7. Procédé selon la revendication 6, comprenant en outre l'étape de mise en contact de la paroi de cylindre interne (4) avec l'axe de piston (10) uniquement dans le cas d'une destruction du piston (6).

8. Procédé selon la revendication 7, dans lequel l'étape de procédé de mise en contact de la paroi de cylindre interne (4) avec l'axe de piston (10) uniquement dans le cas d'une destruction du piston (6) comprend en outre la réduction du basculement de l'axe de piston (10) en fournissant deux points de contact de guidage d'urgence sur les côtés opposés de l'axe de piston (10) pour venir en contact avec la paroi de cylindre interne (4).
